# EUROPÄISCHE PATENTSCHRIFT

(11) **EP 0 528 253 B1**
(45) Veröffentlichungstag und Bekanntmachung des Hinweises auf die Patenterteilung: **26.07.1995**
(21) Anmeldenummer: 92113252.8
(22) Anmeldetag: 04.08.1992
(51) Int. Cl.: F16F 13/00

(54) **Hydraulisch dämpfendes Stützlager für Fahrwerksteile in Kraftfahrzeugen**
Hydraulically damped support bearing for vehicle chassis
Palier de support à amortissement hydraulique pour parties de châssis de voiture

(30) Priorität: 20.08.1991 DE 4127478
(43) Veröffentlichungstag der Anmeldung: 24.02.1993
(73) Patentinhaber: LEMFOERDER METALLWAREN AG., D-49441 Lemförde (DE)
(72) Erfinder: Sprang, Rüdiger, Dipl.-Ing., W-4515 Ostercappeln (DE); Vossel, Andreas, Dipl.-Ing., W-4500 Osnabrück (DE)
(74) Vertreter: Bruse, Willy Hans Heinrich

(56) Entgegenhaltungen:
- EP-A- 0 255 434
- DE-A- 3 119 361
- FR-A- 2 587 774
- US-A- 4 733 854
- Patent Abstracts of Japan vol. 10, no. 204(M-499)(2260) 17.Juli 1986& JP-A-61 45 131 (KURASHIKI KAKO) 5. März 1986
- Patent Abstracts of Japan Vol.14, no. 428(M-1025)(4371) 14.Sept. 1990 & JP-A-02 169 313 (TOYO TIRE & RUBBER) 29.Juni 1990
- Patent Abstracts of Japan vol. 12, no. 36(M-664)(2883) 3. Febr. 1988& JP-A- 62 188 832(TOYODA GOSEI) 18. aug. 1987
- Patent Abstracts of Japan vol. 12, no, 83(M-677)(2930) 16.März 1988& JP-A-62 224 744(KINUGAWA RUBBER IND CO) 2.October 1987

## Beschreibung

Die Erfindung betrifft ein hydraulisch dämpfendes Stützlager für Fahrwerksteile in Kraftfahrzeugen nach dem Oberbegriff des Patentanspruches 1.

Bekannt ist ein solches Stützlager aus JP-A-61 45 131 und PATENT ABSTACTS OF JAPAN vol. 10, no. 204 (M-499)(2260) vom 17. Juli 1986. Der Federkörper und die von diesem teilweise umschlossenen Kammern mit der Flüssigkeitsfüllung sind zwischen einem auf die Hauptbelastungsrichtung ausgerichteten äußeren Hülse und einem diese zentral auf ganzer Länge durchsetzenden Innenrohr angeordnet. Die Trennwand zwischen den beiden Kammern ist einerseits an dem Innenrohr fest angeordnet und andererseits an einer in die äußere Hülse eingesetzten Buchse gleitend beweglich.

Ein Stützlager aus der DE-OS 41 10 258 dient als Druckstabdämpfer zwischen Fahrwerksteilen, um hauptsächlich eine in axialer Richtung des Druckstabes auftretende Schwingungsbelastung zu dämpfen bzw. zu isolieren.

Es weist nicht das Merkmal auf, daß ein Überströmkanal in der Außenmantelfläche der Buchse angeordnet und durch die Innenmantelfläche der äußeren Hülse abgedeckt ist.

Mittel zur integrierten Abkopplung der Bedämpfung von Schwingungen mit kleiner Amplitude sind aus der EP 01 56 697 bekannt. Es handelt sich hier um ein Motorlager.

Aus der DE-PS 32 25 700 ist auch die Entkopplung bzw. gesonderte Bedämpfung kleiner Schwingungsamplituden, vor allem im akustischen Bereich, durch eine Membran, die in besonderer Abstimmung auf diese kleinen Schwingungsamplituden mit einem Spielraum zwischen den beiden Kammern als ein gemeinsamer Wandungsteil angeordnet ist und demzufolge nur wirksam wird, wenn sich solche Schwingungen mit ihrer Amplitude in der vertikalen Belastungsrichtung des Motorlagers ausbreiten.

Aus der DE-PS 37 39 464 ist ein hydraulisch dämpfendes Lager für Kraftfahrzeuge bekannt, bei dem ein Elastomerkörper ein auf die Hauptbelastungsrichtung ausgerichtetes Innenrohr mit einem dieses umgebendes Außenrohr verbindet, und bei dem in dem Elastomerkörper sich diametral gegenüberliegend mit Flüssigkeit gefüllte Kammern vorgesehen sind, die durch einen Überströmkanal miteinander kommunizieren und zum anderen durch ein gemeinsames Wandteil voneinander getrennt sind, welches bei kleinsten Amplituden einen Druckausgleich zwischen den beiden Kammern ermöglicht. Auch aus der DE-OS 35 14 268 und der DE-PS 35 31 182 sind hydraulisch dämpfende Lager mit rohrförmigen, auf die Hauptbelastungsrichtung ausgerichteten Befestigungsteilen bekannt, die dazu bestimmt sind, radial zur Hauptbelastungsrichtung auftretende Schwingungsbelastungen zu dämpfen.

Gegenüber diesem Stand der Technik ist es Aufgabe der Erfindung, durch eine entsprechende Gestaltung eines hydraulisch dämpfenden Lagers, bei dem ein zentrales Innenrohr in einer äußeren Hülse axial beweglich geführt und hauptsächlich in Achsrichtung belastet wird, in den Eigenschaften zu verbessern und mit hoher Anforderung an die Betriebssicherheit kostengünstig herstellen zu können.

Diese Aufgabe löst die Erfindung durch eine Ausbildung mit den Merkmalen nach dem Patentanspruch 1.

Ein Lager mit diesen Merkmalen kann bevorzugt als Federbeinstützlager, als Träger- oder Hilfsrahmenlager oder als Lenkerlager für die Anordnung im Fahrwerksbereich eines Kraftfahrzeuges ausgebildet werden. Die Aufgabe eines solchen Lagers ist die Aufnahme statischer Belastungen hauptsächlich in axialen, begrenzt aber auch in radialen Richtungen, welches außerdem Torsions- und kardanische Beanspruchungen kompensiert und daraus herrührende Schwingungen dämpft. Dabei ist die Steifigkeit des Lagers und seine Dämpfungswirkung sehr weitgehend auf die Betriebsbelastungen und die dadurch auftretenden Schwingungen abstimmbar. Dies erfolgt teilweise durch den Elastomerkörper, der zwischen der äußeren Hülse und dem zentralen Kern angeordnet ist und dessen Elastizität durch Auswahl der Härte des elastomeren Werkstoffes beeinflußt werden kann. Zum anderen erfolgt dies durch die Mittel zur hydraulischen Bedämpfung mittels eines in metallischen Bauteilen ausgebildeten und dadurch exakt definierbaren Überströmkanals zwischen den beiden Kammern und durch die gleitende, abgedichtete Anlage der Scheibe an der Zylinderwandung der Buchse, wobei mechanische Überbeanspruchungen des elastomeren Werkstoffes vermieden werden. Weitere Mittel zur Abstimmung der Dämpfungscharakteristik des Lagers bestehen darin, daß der Elastomerkörper bei der Einfederung Anschlagflächen berührt, die einer weiteren Einfederung progressiven Widerstand entgegensetzen. Eine weitere Möglichkeit besteht darin, daß sich für ausgewählte Amplitudenbereiche ein zusätzlicher Überströmquerschnitt öffnet, wobei besondere Zulaufkonturen das Öffnen dieses Überströmquerschnittes beeinflussen.

Die Patentansprüche 2 bis 4 enthalten weitere wichtige Merkmale zur konstruktiven Ausgestaltung der Erfindung.

Auf der Zeichnung sind Ausführungsbeispiele der Erfindung dargestellt. Es zeigen:
- Figur 1: einen vertikalen Schnitt durch ein Federbeinstützlager,
- Figur 2: eine gegenüber Figur 1 vergrößerte Schnittdarstellung der Trennwandausbildung,
- Figur 3: eine Vergrößerung der Einzelheit X in Figur 2,
- Figur 4: eine gegenüber Figur 2 abgeänderte Schnittdarstellung der Trennwand und
- Figur 5: eine Draufsicht auf ein Detail der Trennwand in Richtung des Pfeiles W in Figur 4.

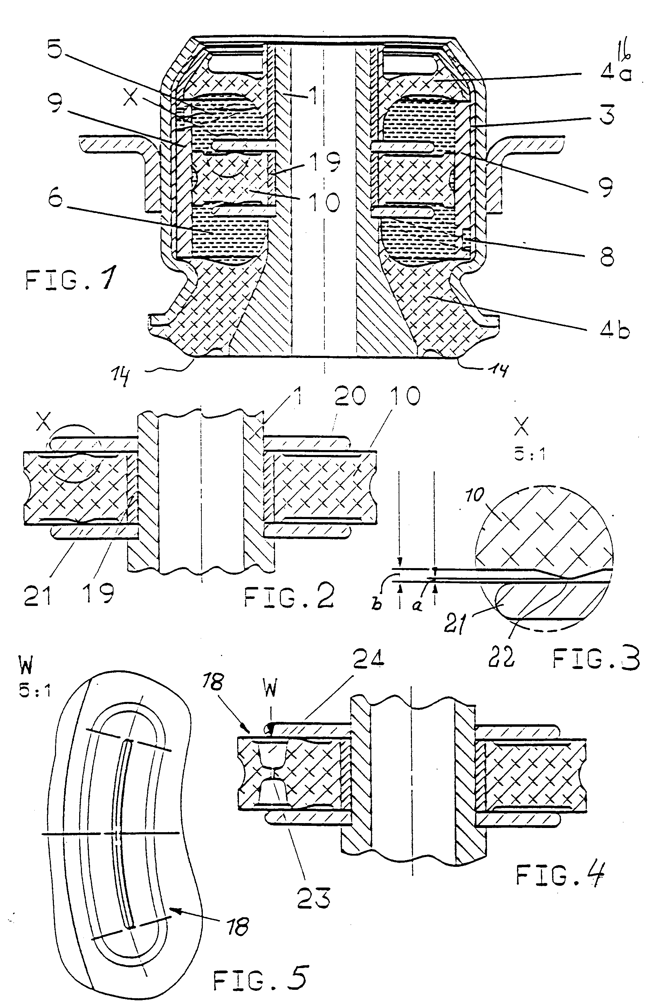

Bei dem Ausführungsbeispiel des Federbeinstützlagers nach Figur 1 ist ein Innenrohr 1 auf das Ende einer Druckstange gegenüber dieser axial unbeweglich aufgesetzt. Eine äußere Hülse 3 bildet das Gehäuse des Lagers und ist mit dem Innenrohr durch einen in Anpassung an gewünschte elastische Eigenschaften geformten Elastomerkörper verbunden. Innerhalb dieses Elastomerkörpers sind zwei mit einer inkompressiblen Flüssigkeit gefüllte Kammern 5 und 6 ausgebildet, die eine gemeinsame Trennwand aufweisen und durch einen Überströmkanal 8 miteinander kommunizieren. Dieser Überströmkanal 8 ist als offene Rille am Außenmantel einer in die Hülse 3 eingesetzten Buchse 9 eingearbeitet, so daß die Hülse 3 die offene Seite des Überströmkanals 8 abdeckt. Die Trennwand besteht aus einer Scheibe 10 eines elastisch verformbaren Werkstoffes ausgewählter Steifigkeit und ist festhaftend auf einem Innenring 19 angeordnet, der auf die Abstufung des Innenrohres 1 aufgesetzt ist. Die Scheibe 10 weist an ihrem Außenumfang Dichtlippenkonturen auf, die sich gegen die innere Zylinderfläche der Buchse 9 gleitend beweglich, jedoch abdichtend, anlegen. Außerdem ist die Scheibe 10 mit einem gewissen axialen Spielraum zwischen zwei Stützringen 20 und 21 angeordnet, so daß die Scheibe 10 sich in einem begrenzten Bereich elastisch verformen kann und dann gegen eine der Stützscheiben 20 bzw. 21 zur Anlage kommt. Der Anlagedruck kann bei größerwerdenden Amplituden progressiv aufgebaut werden, wozu an der Scheibe 10 warzenartige oder noppenartige Vorsprünge 22, ein Wulstring oder dergleichen vorgesehen sind, die ständig an den Stützscheiben 20 und 21 anliegen oder erst nach einer gewissen Verformung der Scheibe 10 zur Anlage kommen. Auch die radiale Ausdehnung der Stützscheiben 20 und 21 kann zum Zwecke der Erreichung einer bestimmten Dämpfungscharakteristik variieren. In den Figuren 2 und 3 ist dargestellt, daß diese warzenartigen Vorsprünge bzw. der Wulstring 22 bei unbelastetem Stützlager einen geringeren Abstand a von der Oberfläche der Stützscheiben aufweisen bzw. aufweist als der Abstand b der Oberfläche der Scheibe 10. In den Figuren 4 und 5 ist schließlich die Anordnung eines besonders profilierten Überströmkanals 18 in der Scheibe 10 der gemeinsamen Trennwand beider Kammern 5 und 6 dargestellt. Bei dieser Anordnung wird ein Drosselquerschnitt 23 mit trichterförmigen Vorkammern 24 auf beiden Seiten durch elastisch verformbare Lippen gebildet, so daß bei starken Einfederungen und entsprechenden Amplituden über diese Öffnung ein Druckausgleich zwischen den beiden Kammern 5 und 6 erfolgen kann. Auch eine solche Ausbildung dient zur weiteren Abstimmung des Stützlagers in Anpassung an die Charakteristik der zu bedämpfenden Schwingungen.

Aus Gründen der Fertigung ist der eine Endbereich 4a des Elastomerkörpers als Gummimetallteil mit einem Außenmantel und einem Innenmantel ausgebildet, so daß nach der Montage der Außenmantel die Buchse 9 und der Innenmantel die Scheibe 10 gegen axiale Verschiebung sichert. Der andere Endbereich 4b des Elastomerkörpers ist mit der Hülse 3 als Gummimetallteil ausgebildet und mit einer zentralen Öffnung auf das Innenrohr 1 aufgesetzt, gegebenenfalls mit diesem ebenfalls durch Vulkanisation verbunden. Eine nach innen gerichtete Einbiegung der Hülse 3 hält die Teile des Lagers zusammen und vermeidet somit weitere Befestigungsmittel. Der Werkstoff des Elastomerkörpers überdeckt zum Zwecke der Abdichtung und des Korrosionsschutzes weitestgehend die metallischen Oberflächen. An der Unterseite wirken warzenförmige Vorsprünge 14 des Elastomerkörpers eventuell mit einem Anschlagteller zusammen.

Infolge der Einspannung des Elastomerkörpers im oberen Bereich und im unteren Bereich wird bei einer Einfederung und der dadurch bedingten axialen Verschiebung des Innenrohres 1 gegenüber der Hülse 3 eine Verschiebung der Trennwand zwischen den beiden Kammern 5 und 6 und somit eine Volumenveränderung dieser Kammern erfolgen, wodurch ein Druckausgleich zwischen den Kammern über den Überströmkanal 8 und eine Dämpfung von Schwingungen bewirkt wird. Somit beruht die Dämpfung wesentlich auf dem Tilgereffekt der schwingenden Flüssigkeitssäule in dem Überströmkanal 8.

### BEZUGSZEICHENLISTE:

- 1: Innenrohr
- 3: Hülse (außen)
- 5: Kammer
- 6: Kammer
- 8: Überströmkanal
- 9: Buchse
- 10: Scheibe
- 14: Vorsprung
- 18: Überströmkanal
- 19: Innenring
- 20: Stützscheibe
- 21: Stützscheibe
- 22: Vorsprung
- 23: Drosselquerschnitt
- 24: Vorkammer

## Patentansprüche

1. Hydraulisch dämpfendes Stützlager für Fahrwerksteile in Kraftfahrzeugen, bestehend aus einer äußeren Hülse (3) und einem demgegenüber axial einfedernden Innenrohr (1), einem diese beiden Bauteile verbindenden Federelement aus elastomerem Werkstoff und wenigstens Zwei mit Flüssigkeit gefüllten und im wesentlichen von dem Federelement umschlossenen Kammern (5,6), die eine gemeinsame, an dem Innenrohr (1) fest angeordnete, an einer Zylinderfläche einer in die äußere Hülse (3) eingesetzten Buchse (9) abgedichtet und in der Belastungsrichtung gleitend beweglich anliegende Trennwand aufweisen und durch wenigstens einen beide Kammern (5,6) miteinander verbindenden, in der Außenmantelfläche der Buchse (9) angeordneten und durch die Innenmantelfläche der äußeren Hülse (3) abgedeckten Überströmkanal (8) miteinander verbunden sind, dadurch gekennzeichnet, daß eine die Trennwand bildende Scheibe (10) aus einem elastisch verformbaren Werkstoff in einem vorbestimmten Bereich zwischen Anschlägen (20,21) in der Belastungsrichtung begrenzt beweglich angeordnet ist und wenigstens ein weiterer, als Überströmventil zum Druckausgleich zwischen den beiden Kammern (5,6) wirksamer Überströmkanal (18) zur kommunizierenden Verbindung beider Kammern (5,6) in der Trennwand angeordnet und schlitzförmig ausgebildet ist.

2. Stützlager nach Anspruch 1, dadurch gekennzeichnet, daß die Trennwand aus einer am Außenumfang mit Dichtlippen ausgestatteten, festhaftend auf einem auf das Innenrohr (1) aufgesteckten Ring angeordneten Scheibe (10) aus elastischem Werkstoff besteht, die mit einem Axialspiel zwischen starren, ebenfalls auf das Innenrohr aufgesteckten Stützscheiben (20,21) angeordnet ist.

3. Stützlager nach Anspruch 2, dadurch gekennzeichnet, daß an der Oberfläche der Scheibe aus elastischem Werkstoff warzenartige Vorsprünge oder ein Wulstring (22) angeordnet sind.

4. Stützlager nach Anspruch 1, dadurch gekennzeichnet, daß der weitere Überströmkanal (18) beiderseits eines durch elastisch verformbare Lippen gebildeten Drosselquerschnitts (23) trichterförmige Vorkammern (24) aufweist.

## Claims

1. Hydraulically damping support bearing for chassis parts in motor vehicles, comprising an outer sleeve (3) and an inner tube (1) effecting axial spring deflection relative to the outer sleeve, a spring element made of elastomer material connecting said two structural parts and at least two fluid-filled chambers (5, 6), which are substantially enclosed by the spring element and have a common partition wall, which is fixed to the inner tube (1) and rests so as to be sealed-off and slidable in the direction of load against a cylinder surface of a bush (9) inserted into the outer sleeve (3), and are connected to one another by at least one overflow channel (8), which connects the two chambers (5, 6) to one another, is disposed in the outer lateral surface of the bush (9) and is covered by the inner lateral surface of the outer sleeve (3), characterized in that a disc (10) made of an elastically deformable material forming the partition wall is disposed so as to be movable to a limited extent in the direction of load in a predetermined region between stops (20, 21) and at least one further overflow channel (18) acting as an overflow valve for pressure equalization between the two chambers (5, 6) is disposed for communicating connection of the two chambers (5, 6) in the partition wall and is of a slot-like construction.

2. Support bearing according to claim 1, characterized in that the partition wall comprises a disc (10) made of elastic material, which is equipped at the outer periphery with sealing lips and disposed adhesively on a ring mounted onto the inner tube (1), said disc being disposed with axial play between rigid supporting discs (20, 21) which are likewise mounted onto the inner tube.

3. Support bearing according to claim 2, characterized in that wart-like projections or a bead ring (22) are disposed on the surface or the disc made of elastic material.

4. Support bearing according to claim 1, characterized in that the further overflow channel (18) has funnel-like antechambers (24) on either side of a throttle cross-section (23) formed by elastically deformable lips.

## Revendications

1. Palier de support à amortissement hydraulique pour parties de châssis de véhicules automobiles, constitué d'un manchon extérieur (3) et d'un tube intérieur (1) à débattement axial par rapport au manchon (3), d'un élément élastique en matériau élastomère qui relie ces deux pièces et d'au moins deux chambres (5, 6) remplies de liquide et pour l'essentiel enfermées dans l'élément élastique, qui présentent une paroi séparatrice commune, fixée contre le tube intérieur (1) et s'appliquant, avec étanchéité et mobile en glissement dans la direction de sollicitation, contre une face cylindrique d'une douille (9) insérée dans le manchon extérieur (3), et qui communiquent entre elles par au moins un canal de débordement (8) reliant entre elles les deux chambres (5, 6), pratiqué dans la face d'enveloppe extérieure de la douille (9) et recouvert par la face d'enveloppe intérieure du manchon extérieur (3), **caractérisé** en ce qu'une rondelle (10) constituant la paroi séparatrice et réalisée en un matériau élastiquement déformable est disposée à déplacement limité, dans la direction de sollicitation, dans une plage prédéfinie entre des butées (20, 21), et au moins un canal de débordement supplémentaire (18), actif comme soupape de débordement pour équilibrer la pression entre les deux chambres (5, 6), est disposé dans la paroi séparatrice pour faire communiquer entre elles les deux chambres (5, 6) et est configuré en forme de fente.

2. Palier de support selon la revendication 1, **caractérisé** en ce que la paroi séparatrice est constituée d'une rondelle (10) en matériau élastique qui est équipée de lèvres d'étanchéité sur la périphérie extérieure, est disposée en adhérence sur une bague emmanchée sur le tube intérieur (1), et est disposée avec un jeu axial entre des rondelles de soutien rigides (20, 21), elles aussi emmanchées sur le tube intérieur.

3. Palier de support selon la revendication 2, **caractérisé** en ce que des saillies du genre boutons ou un bourrelet annulaire (22) sont disposés sur la surface de la rondelle en matériau élastique.

4. Palier de support selon la revendication 1, **caractérisé** en ce que le canal de débordement supplémentaire (18) présente des préchambres (24) en entonnoir de part et d'autre d'une section d'étranglement (23) formée par des lèvres élastiquement déformables.
